# EUROPEAN PATENT SPECIFICATION

(11) **EP 0 520 587 B1**
(45) Date of publication and mention of the grant of the patent: **31.01.1996**
(21) Application number: 92201914.6
(22) Date of filing: 26.06.1992
(51) Int. Cl.: B62D 33/06

(54) **A tilting device for a vehicle with a resiliently suspended tiltable cab**
Kippvorrichtung für ein Fahrzeug mit einer elastisch aufgehängter Kippkabine
Dispositif de basculement pour véhicule à cabine basculable à suspension élastique

(30) Priority: 28.06.1991 NL 9101130
(43) Date of publication of application: 30.12.1992
(73) Proprietor: APPLIED POWER INC., Butler, Wisconsin 53007 (US)
(72) Inventor: Mentink, Laurentius Andreas Gerardus, NL-7482 XL Haaksbergen (NL); Oudelaar, Tone, NL-7576 CA Oldenzaal (NL)
(74) Representative: Boelsma, Gerben Harm, Ir.

(56) References cited:
- EP-A- 0 384 005
- DE-U- 8 809 201
- US-A- 3 958 659
- PATENT ABSTRACTS OF JAPAN vol. 007, no. 217 (M-245)27 September 1983 & JP-A-58 112 881 ( HINO JODOSHA KOGYO )

## Description

The invention relates to a tilting device for a vehicle having a resiliently suspended tiltable cab, comprising a piston cylinder device, one end of which is pivotally connected to the chassis of the vehicle, whereas its other, extendible end is provided with engagement means, which cooperate with complemantarily shaped engagement means on the cab, said engagement means being normally - with the cab in the drive position end the piston cylinder device in the retracted position - positioned out of engagement and spaced one relative to the other so as to allow the cab to resiliently move up and down, wherein one of the engagement means is formed by a pin extending parallel to the tilting axis and the other engagement means is forced by a support provided with a slot-shaped receiving cavity that opens towards said pin, and with a pivotable latch hook member which is normally - i.e. when the piston cylinder device is retracted - held in an inactive position but may - when the cab is tilted from the rest or riding position, whereby the pin is entering into the receiving cavity-close around said pin end lock the latter within the receiving cavity during the tilting procedure.

Such a tilting device is disclosed in DE-U-8809201.

With this well-known tilting device the latch hook member which (in this case) is mounted with the support on the cab, is kept by a locking pawl in its opened position and is urged by the extending piston rod into the latch position.

To release the pin (being in this case provided at the free piston rod end) from the receiving cavity at the end of a returning tilting movement the locking pawl has to be retracted from its locking position by a separate, hydraulically operated device.

In the well-known tilting device there is also a rocking connecting arm between the free piston rod end and the cab, which rocking arm may finally lead to an unpleasant rattling noise during riding.

The invention aims at avoiding a separate device for releasing the pin from the receiving cavity and to further improve the tilting device.

For that purpose the invention provides a tilting device, which is characterized in that the latch hook member cooperates with a lever adapted to be operated by a stationary element so as to open end close the latch hook member respectively when the piston cylinder device is moved into or from its retracted position.

A first practical embodiment of the invention is characterized in that the pin is provided on the cab and the receiving cavity for it is provided at the end of the piston-cilinder device, the locking lever being integrally formed with the latch hook member which is spring-biased into the latch position, the lever being adapted to become - in the initial stage of a tilting movement or in the final stage of a returning tilting movement - released from or engaged with (respectively) a guide cam tending to keep the lever against spring action in or move the lever against spring action into the latch position.

Preferably, to secure a reliable engagement of the pin into its receiving cavity, the latch hook member has a cam surface facing towards the pin, such that the latch hook member is swung, against spring action, outwardly from the latch position under the pressure of a pin entering the receiving cavity.

A second practical embodiment of the invention is characterized in that the pin is provided on the cab end the receiving cavity for it is formed at the respective end of the piston cylinder device, the locking lever being a separate lever which is spring-biased in its locking position, whereas the latch hook member is spring-biased into the opened position and has a leg portion which crosses the path of the entering pin when in said opened position and which is adapted to be moved by the entering pin into a retracted position, corresponding with the closed position of the latch hook member, wherein the free end of the leg portion is engagedby a locking cam on the locking lever.

Two embodiments of the invention will be hereinafter further explained, by way of example, with reference to the drawing.
Fig. 1 is a diagrammatic side view of a truck with a tiltable cabin;
fig. 2 is a diagrammatic side view of the connection between the tilting device and the tiltable cab in a position, in which the pin on the cab is locked within its receiving cavity at the end of the initial stage of a tilting movement or in the final stage of a returning tilting movement and
fig. 3 shows a modification of the connection shown in fig. 2, in the rest or riding position of the cab, while the piston cylinder device is (substantially) in its fully retracted position.

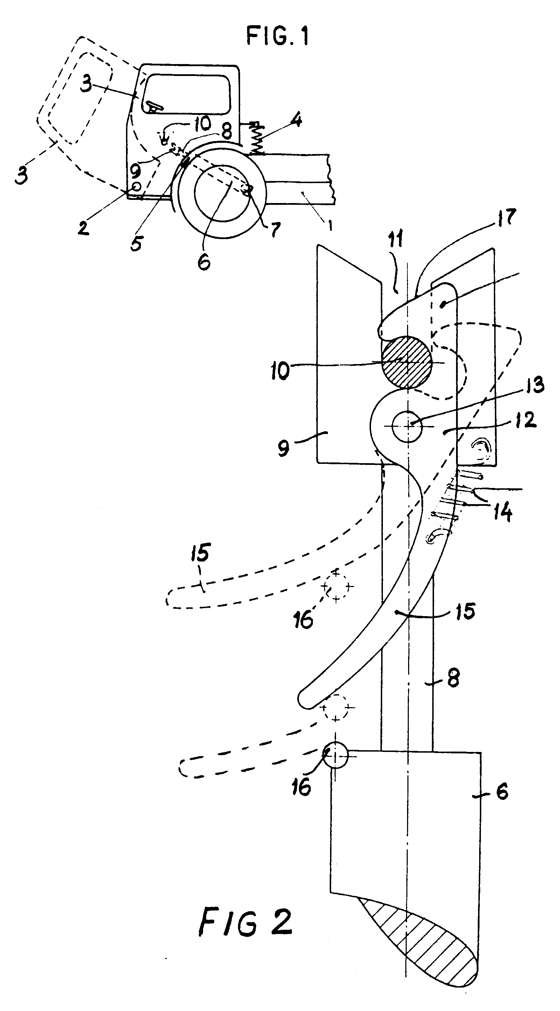

With reference to fig. 1, the truck shown diagrammatically therein comprises a chassis 1 with a cab 3 mounted for a tilting movement about an axis 2 positioned at the front, said cab being normally supported - in its driving position - with its rearward end on a resilient support 4.

A tilting device 5 is provided to tilt the cab 3 forwardly from the driving position. This tilting device comprises a piston cylinder device, the cylinder 6 of which has (in the example shown) its lower end pivotally connected to the chassis at 7 and the piston rod 8 of which carries at its upper end a support 9 with a receiving cavity for a pin 10 connected to the cab.

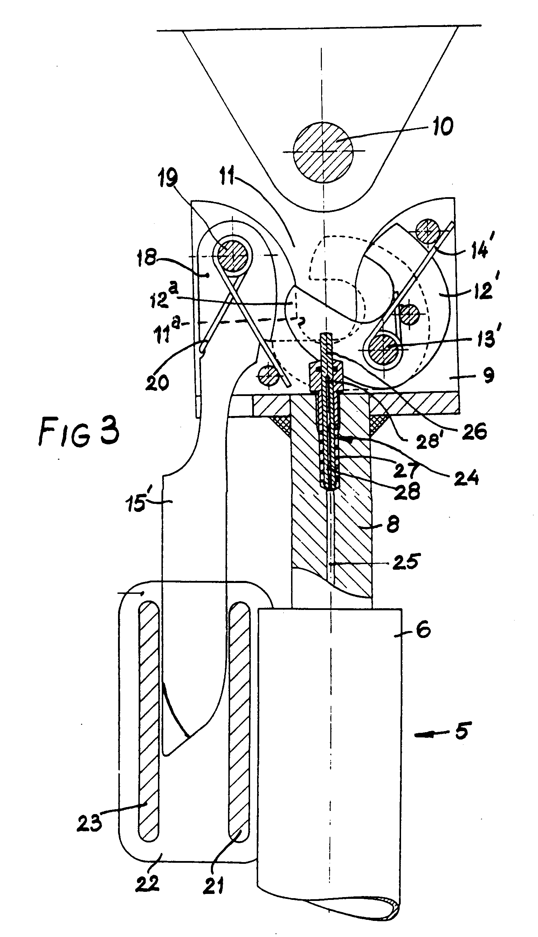

The connection between the cab 3 and the tilting device 5 will be hereinafter further described with reference to fig. 2 and 3.

In the two embodiments of fig. 2 and 3 the pin 10 is attached to the cab in the usual manner, i.e. by means of two transversely spaced brackets, whereas the support 9 comprising a receiving cavity for said pin, is forced at the free end of the piston rod 8 of the piston cylinder device 5, the lower end (not shown in fig. 2 and 3) of the cylinder 6 of which is connected to the chassis.

In the first embodiment according to fig. 2 the pin 10 engages into the slot 11 in the support 9 and is locked within this slot by means of a latch hook member 22. The latch hook member 12 is pivotally attached to the support 9 about a pivot pin 13 located under the bottom of the slot 11. The latch hook member 12 is spring-biased into the position shown with full lines in the drawing by means of a pull spring 14, one end of which is connected to the support 9 and the other end of which is fastened to a lever 15 extending from the latch hook member 12.

Normally, i.e. in the rest or riding position of the cab, the pin 10 is taking a position spaced above the receiving opening of the slot-shaped receiving cavity 11 in the support 9, while the piston rod 8 is in its (substantially) fully retracted position within the cylinder 6. In the latter position the lever 15 engages a cam surface 16 provided on the cylinder or on the chassis (vide the lever 15 in the position shown in dotted lines) and in engagement with the cam 16 in the upper position (shown in dotted lines) of the latter. The position shown in the drawing (fig. 2) may be considered as that position, in which the pin 10 has entered into the receiving support 9 - while the cab is still in its horizontal position - at the end of an initial stage of an extending movement of the piston rod 8 or as that position, in which the pin 11 has returned into engagement with its support at the end of a returning tilting movement and is about to move out of the receiving cavity while ultimately moving the piston rod 8 into the fully retracted position within the cylinder 6. When considering the position of fig. 2 as an initial stage of a tilting movement, it will be understood, that the pin 10 will be kept caught within its receiving cavity when the piston rod 8 is extended further from the cylinder 6.

When considering the position of fig. 2 as a final intermediary stage of a returning tilting movement, however, it will be clear, that a slight further movement of the piston rod 8 into the cylinder 6 will cause the lever 15 to be engaged by the cam 16 (vide the latter in its lowermost position shown in dotted lines), so that the lever 15 will move clockwise about the pivot pin 13 end the latch hook member 12 is swung into the opened position, permitted the pin 10 to freely escape from its receiving support 11 when completing the retracting movement of the piston rod 8. In the fully retracted position of the piston cylinder device 5 the lever 15 takes the lower position shown with dotted lines.

It will also be understood that, starting from the (fully) retracted position of the piston cylinder device just referred to, the latch hook member 12 will - in the initial phase of a tilting movement effected by an extending movement of the piston rod - gradually move into the latch position and completely close around the pin 10 after the latter has entered into the receiving support 11. In the example shown an upwardly slanting cam surface 17 is provided on the upper side of the latch hook member 12, allowing the latch hook member to turn aside (to the right) under de pressure of a pin 10 entering into the receiving cavity 11 and then return into its latch position after the pin has passed.

In the second embodiment (according to fig. 3) the drawing shows the connection between the cab end the chassis in the rest or riding position of the cab. The pin 10 is in a position at a certain distance above the receiving opening of the receiving cavity 11 in the support 9, while the piston rod 8 is in its (substantially) fully retracted position within the cylinder 6.

The latch hook member 12' is mounted for a pivoting movement about a pivot pin 13' located laterally with respect to the receiving cavity 11 and is biased in the opened position (indicated with full lines in the drawing) by means of a coil spring 14'. In this position of the latch hook member 12' the pin 10 may, when extending the piston rod 8 in the initial stage of a tilting movement, enter freely into the receiving cavity of the upwardly moving support 9. After the pin having thus entered through a certain distance into the receiving cavity 11, an engagement is taking place with the extending arm 12a of the latch hook member 12' crossing the space of the receiving cavity. The arm 12a is thereby pushed downwardly by the pin 11, causing the member 12' against the action of the spring 14' to turn counter-clockwise and to close about the upper side of the just introduced pin 10. The latch hook member has thus arrived in the latch position indicated by dotted lines in the drawing and is locked in this latch position by a locking pawl 18 which is pivotally mounted a pivot pin 19 provided on the support 9. This locking pawl 18 is normally, i.e. with the piston rod 8 (substantially) into its retracted position within the cylinder 6, held against the action of a coil spring 20, in its inactive position by a fixed guide means 21, which cooperates with a lever 15' that extends from said locking pawl. During the initial stage of the tilting movement described hereinabove, however, the lever 15' is released from the guide means 21 so that the locking Pawl 18 has arrived in a position allowing it to engage the (left) free end of the arm 12a of the latch hook member 12e which has returned into its latch position.

In reverse order it will be understood, that in the final stage of a back tilting movement, the ramp surface 15a of the arm 15' will engage the upper edge of the guide means 21 and that as a result of this the cam 18 will be pushed into its inactive position, allowing the spring 14' to turn the latch hook member 12' into its opened position, in which the pin 10 may be freely escape from the lowering support 9.

In the embodiment shown in fig. 3, the guide means 22 is attached on a resilient base 22 that is connected to the chassis and on which a second guide means 23 is provided. In the (substantially) fully retracted position of the piston cylinder device 5 the arm 15' is locked between the two guide means 23 and 21, thereby locking the piston-cylinder device into its inactive position relative to the chassis. The resilient base 22 permits the piston cylinder device 5 to perform a certain swinging motion relative to the chassis when a tilting movement is being carried out.

A particular feature of the embodiment shown in fig. 3 relates to the provision of a restrictive valve 24 in the upper end of a passage 25 extending through the piston rod 8. This passage may be closed by pressing the cylindrical valve body 26 inwardly, against the action of the spring 27. In normal use, however, the bias of the spring 27 will cause the valve body 26 to take an upper, opened position, in which the longitudinal bore 28 of the valve body 26 is connected to the surrounding atmosphere via a cross bore of a restricted cross-sectional area. When initiating a tilting movement, as described hereinabove, the pin 10 entering into the receiving cavity 11 of the support 9 will finally engage the upper end of the valve body 26 and push the latter into the closed position. The valve 26 is thus acting as a safety valve in the sense, that upon initiating a tilting movement of the tilting device 5 the full hydraulic pressure onto the piston will become effective only after the valve 26 has moved into its closed position, this being an indication that the pin 10 is actually located within its receiving cavity and that the cab and the tilting device 5 are thus safely connected one to another. As long as the valve 26 is still in its upper position, hydraulic pressure may escape through the said cross bore 28 which prevents the required power from being delivered by the piston cylinder device 5 for the tilting procedure.

## Claims

1. A tilting device (5) for a vehicle have a resiliently suspended tiltable cab (3), comprising a piston cylinder device (6, 8), one end of which is pivotally connected to the chassis (1) of the vehicle, whereas its other, extendable end is provided with engagement means (9, 11), which coperate with complementarily shaped engagement means (10) on the cab (3), said engagement means (9, 11 and 10) being normally - with the cab (3) in the driving position and the piston cylinder device (6, 8) in the retracted position - positioned out of engagement and spaced one relative to the other so as to allow the cab (3) to resiliently move up and down, wherein one of the engagement means (9, 11 and 10) is formed by a pin (10) extending parallel to the tilting axis (12) and the other engagement means (9, 11) is formed by a support (9) provided with a slot-shaped receiving cavity (11) that opens towards said pin (10), and with a pivotable latch hook member (12) which is normally - i.e. when the piston cylinder device (6, 8) is retracted - held in an inactive position but may - when the cab (3) is tilted from the rest or riding position, whereby the pin (10) is entering into the receiving cavity (11) - close around said pin (10) and lock the latter within the receiving cavity (11) during the tilting procedure, characterized in that the latch hook member (12; 12') cooperates with a lever (15; 15') adapted to be operated by a stationary element so as to open and close the latch hook member (12; 12') respectively when the piston cylinder device (6, 8) is moved into or from its retracted position.

2. A tilting device (5) according to claim 1, characterized in that the pin (10) is provided on the cab (3) and the receiving cavity (11) for it is provided at the end of the piston-cilinder device (6, 8), the locking lever (15) being integrally formed with the latch hook member (12) which is spring-biased (14) into the latch position, the lever (15) being adapted to become - in the initial stage of a tilting movement or in the final stage of a returning tilting movement - released from or engaged with (respectively) a guide cam (16) tending to keep the lever (15) against spring action (14) in or move the lever (15) against spring action (14) into the latch position.

3. A tilting device (5) according to claim 1, characterized in that the latch hook member (12) is provided at the upper side - facing the pin (10) - with a cam surface (17) that is shaped such that the latch hook member (12) may, under the pressure of an entering pin (10) and against spring-action (14), turn from the latch position outwardly.

4. A tilting device (5) according to claim 1, characterized in that the pin (10) is provided on the cab (3) and the receiving cavity (1) for it is formed at the respective end of the piston cylinder device (6, 8), the locks lever (15') being a separate lever which is spring-biased (20) in its lying position, whereas the latch hook member (12') is spring-biased (14') into the opened position and has a leg portion (12a) which crosses the path of the entering pin (10) when in said opened position and which is adapted to be moved by the entering pin (10) into a retracted position, corresponding with the closed position of the latch hook member (12'), wherein the free end of the leg portion (17a) is engaged by a locking cam (18) on the lock lever (15').

5. A tilting device according to clam 4, characterized by a pressure reduction valve (24) provided in the upper end portion of a through going passage (25) in the piston rod (8), said valve (24) being normally spring-biased (27) in its opened position but is adapted to be depressed by the pin (10) on the cab (3) into the closed position when the pin (10) is entering into the receiving cavity (11).

## Patentansprüche

1. Kippvorrichtung (5) für ein Fahrzeug mit elastisch aufgehängter Kippkabine (3), aufweisend eine Kolbenzylindervorrichtung (6,8), deren eines Ende drehbar mit dem Chassis (1) des Fahrzeugs verbunden ist, während ihr anderes, ausfahrbares Ende mit Eingriffsmitteln (9,11) versehen ist, die mit komplementär geformten Eingriffsmitteln (10) an der Kabine (3) zusammenwirken, wobei besagte Eingriffsmittel (9, 11 und 10) normalerweise - mit der Kabine (3) in der Fahrtposition und der Kolbenzylindervorrichtung (6,8) in der Einziehposition - außer Eingriff positioniert sind und eines relativ zum anderen beabstandet angeordnet ist, um der Kabine (3) zu erlauben, sich elastisch auf und ab zu bewegen, wobei eines der Eingriffsmittel (9, 11 und 10) durch einen sich parallel zur Kippachse (12) erstreckenden Stift (10) gebildet wird und das andere Eingriffsmittel (9,11) durch eine Auflage (9) gebildet wird, die mit einer sich zu besagtem Stift (10) hin öffnenden schlitzförmigen Aufnahmevertiefung (11) und mit einem drehbaren Sperrhakenelement (12) versehen ist, das normalerweise - d.h. wenn die Kolbenzylindervorrichtung (6,8) eingezogen ist - in einer inaktiven Position gehalten wird, sich jedoch - wenn die Kabine (3) aus der Auflage- oder Fahrtposition gekippt wird, wodurch der Stift (10) in die Aufnahmevertiefung (11) eintritt - um besagten Stift (10) herum schließen und den letzteren während des Kippvorgangs innerhalb der Aufnahmevertiefung (11) arretieren kann, dadurch gekennzeichnet, daß das Sperrhakenelement (12;12') mit einem Hebel (15;15') zusammenwirkt, der dafür ausgelegt ist, durch ein stationäres Element betätigt zu werden, um das Sperrhakenelement (12;12') jeweils zu öffnen und zu schließen, wenn die Kolbenzylindervorrichtung (6,8) in ihre oder aus ihrer Einziehposition bewegt wird.

2. Kippvorrichtung (5) nach Anspruch 1, dadurch gekennzeichnet, daß der Stift (10) an der Kabine (3) angeordnet ist und die Aufnahmevertiefung (11) für ihn am Ende der Kolbenzylindervorrichtung (6,8) angeordnet ist, wobei der Arretierhebel (15) integral mit dem Sperrhakenelement (12) gebildet wird, das in die Sperrposition durch eine Feder vorgespannt (14) ist, wobei der Hebel (15) dafür ausgelegt ist, - in der Anfangsphase einer Kippbewegung oder in der Endphase einer rückkehrenden Kippbewegung - von einem Führungsnocken (16) gelöst bzw. mit ihm in Eingriff gebracht zu werden, der dazu neigt, den Hebel (15) gegen die Federwirkung (14) in der Sperrposition zu halten oder den Hebel (15) gegen die Federwirkung (14) in die Sperrposition zu bewegen.

3. Kippvorrichtung (5) nach Anspruch 1, dadurch gekennzeichnet, daß das Sperrhakenelement (12) an der Oberseite - dem Stift (10) zugekehrt - mit einer Nockenfläche (17) versehen ist, die so geformt ist, daß sich das Sperrhakenelement (12) unter dem Druck eines eintretenden Stifts (10) und gegen die Federwirkung (14) von der Sperrposition nach außen drehen kann.

4. Kippvorrichtung (5) nach Anspruch 1, dadurch gekennzeichnet, daß der Stift (10) an der Kabine (3) angeordnet ist und die Aufnahmevertiefung (1) für ihn am jeweiligen Ende der Kolbenzylindervorrichtung (6,8) ausgebildet ist, wobei der Arretierhebel (15') ein separater Hebel ist, der in seiner Arretierposition durch eine Feder vorgespannt (20) ist, während das Sperrhakenelement (12') in die geöffnete Position durch eine Feder vorgespannt (14') ist und einen Beinabschnitt (12a) hat, der den Weg des eintretenden Stifts (10) in besagter geöffneter Position kreuzt und der dafür ausgelegt ist, durch den eintretenden Stift (10) in eine Einziehposition entsprechend der geschlossenen Position des Sperrhakenelements (12') bewegt zu werden, wobei das freie Ende des Beinabschnitts (17a) mit einem Arretiernocken (18) am Arretierhebel (15') im Eingriff steht.

5. Kippvorrichtung nach Anspruch 4, gekennzeichnet durch ein Druckverminderungsventil (24), das im oberen Endabschnitt einer Durchgangspassage (25) in der Kolbenstange (8) angeordnet ist, wobei besagtes Ventil (24) normalerweise in seiner geöffneten Position durch eine Feder vorgespannt (27) ist, jedoch dafür ausgelegt ist, durch den Stift (10) an der Kabine (3) in die geschlossene Position niedergedrückt zu werden, wenn der Stift (10) in die Aufnahmevertiefung (11) eintritt.

## Revendications

1. Dispositif de basculement (5) pour véhicule à cabine basculante (3) suspendue de manière élastique, comprenant un dispositif (6, 8) à piston et cylindre dont une première extrémité est articulée au châssis (1) du véhicule, tandis que son autre extrémité, déployable, est munie d'un moyen d'enclenchement (9, 11) qui coopère avec un moyen d'enclenchement (10) de forme complémentaire situé sur la cabine (3), lesdits moyens d'enclenchement (9, 11 et 10) étant normalement - la cabine (3) étant dans la position de conduite et le dispositif (6, 8) à piston et cylindre étant dans la position rentrée - dégagés et espacés l'un par rapport à l'autre de façon à permettre à la cabine (3) de s'élever et de s'abaisser de manière élastique, dans lequel un des moyens d'enclenchement (9, 11 et 10) est constitué par une broche (10) s'étendant parallèlement à l'axe de basculement (12) et l'autre moyen d'enclenchement (9, 11) est constitué par un support (9) pourvu d'une cavité réceptrice (11) en forme d'encoche qui débouche vers ladite broche (10), et d'un élément formant crochet de verrouillage articulé (12) qui est normalement - c'est-à-dire lorsque le dispositif (6, 8) à piston et cylindre est rentré - maintenu en position de repos mais peut - lors du basculement de la cabine (3) depuis la position de repos ou de circulation, à la suite de quoi la broche (10) pénètre dans la cavité réceptrice (11) - se fermer autour de ladite broche (10) et verrouiller cette dernière dans la cavité réceptrice (11) pendant la manoeuvre de basculement, caractérisé en ce que l'élément formant crochet de verrouillage (12; 12') coopère avec un levier (15; 15') actionnable par un élément fixe de façon à ouvrir et fermer l'élément formant crochet de verrouillage (12; 12') respectivement lorsque le dispositif (6, 8) à piston et cylindre atteint ou quitte sa position rentrée.

2. Dispositif de basculement (5) selon la revendication 1, caractérisé en ce que la broche (10) est disposée sur la cabine (3) et la cavité (11) destinée à la recevoir est ménagée à l'extrémité du dispositif (6, 8) à piston et cylindre, le levier de verrouillage (15) faisant corps avec l'élément formant crochet de verrouillage (12) qui est poussé dans la position de verrouillage par un ressort (14), le levier (15) étant conçu pour - au stade initial d'un mouvement de basculement ou au stade final d'un mouvement de basculement de retour - respectivement se dégager de ou s'enclencher avec une came de guidage (16) tendant à maintenir le levier (15) en position verrouillée à l'encontre de l'action du ressort (14) ou à placer le levier (15) en position verrouillée à l'encontre de l'action du ressort (14).

3. Dispositif de basculement (5) selon la revendication 1, caractérisé en ce que l'élément formant crochet de verrouillage (12) comporte sur le dessus - en regard de la broche (10) - une surface de guidage (17) dont la forme est telle que l'élément formant crochet de verrouillage (12) peut, sous la poussée d'une broche (10) en train de pénétrer et à l'encontre de l'action du ressort (14) tourner vers l'extérieur depuis la position de verrouillage.

4. Dispositif de basculement (5) selon la revendication 1, caractérisé en ce que la broche (10) est disposée sur la cabine (3) et la cavité (1) destinée à la recevoir est ménagée à l'extrémité correspondante du dispositif (6, 8) à piston et cylindre, le levier de verrouillage (15') étant un levier séparé qui est poussé dans sa position de verrouillage par un ressort (20), tandis que l'élément formant crochet de verrouillage (12') est poussé dans la position ouverte par un ressort (14') et comporte une partie formant branche (12a) qui croise le passage de la broche (10) en train de pénétrer lorsqu'il est dans ladite position ouverte et qui est déplaçable par la broche (10) en train de pénétrer pour venir dans une position rentrée, correspondant à la position fermée de l'élément formant crochet de verrouillage (12'), l'extrémité libre de la partie formant branche (17a) étant sollicitée par une came de verrouillage (18) placée sur le levier de verrouillage (15').

5. Dispositif de basculement selon la revendication 4, caractérisé par un détendeur (24) disposé à l'extrémité supérieure d'un passage traversant (25) ménagé dans la tige (8) de piston, ledit détendeur (24) étant normalement sollicité par un ressort (27) pour être en position ouverte mais pouvant être poussé en position fermée par la broche (10) placée sur la cabine (3) au moment où la broche (10) pénètre dans la cavité réceptrice (11).
